# EUROPEAN PATENT SPECIFICATION

(11) **EP 0 836 694 B1**
(45) Date of publication and mention of the grant of the patent: **23.01.2002**
(21) Application number: 96921920.3
(22) Date of filing: 02.07.1996
(51) Int. Cl.: F16L 55/34, B08B 9/04, G21C 17/017

(54) **MOVABLE ROBOT FOR INTERNAL INSPECTION OF PIPES**
FORTBEWEGBARER ROBOTER ZUR INTERNEN KONTROLLE VON ROHRLEITUNGEN
ROBOT MOBILE POUR L'INSPECTION INTERIEURE DE CONDUITES

(30) Priority: 04.07.1995 DK 78495
(43) Date of publication of application: 22.04.1998
(73) Proprietor: Force-Instituttet, 2605 Brondby (DK)
(72) Inventor: HANSEN, Peder, Bent, S-211 29 Malmö (SE); VESTH, Lars, DK-2300 Copenhagen S (DK); KJUL, Peter, DK-2100 Copenhagen (DK)
(74) Representative: Siiger, Joergen
(86) International application number: DK9600298
(87) International publication number: WO9702452

(56) References cited:
- EP-A- 0 171 633
- EP-A- 0 390 352
- CH-A- 669 127
- DE-A- 2 756 561
- DE-C- 3 419 683
- DE-C- 4 302 731

## Description

### Technical Field

The invention relates to a movable robot comprising a carrier unit and a manipulator unit, the carrier unit causing an axial movement in a pipe line and comprising two or several intermovable units, each of said movable units preferably provided with three projecting arms having contact surfaces for abutting the inner surface of the pipe, such that movable units is fixed relative to the pipe.

### Background Art

Norwegian published specification No. 155 232 discloses a self-propelled pipe pig comprising a stepping device in two pieces. This stepping device comprises a forward stepping element and a rear stepping element each provided with a device for clamping it to the inner surface of the pipe. One of these elements is further provided with drive means for axial movement of the forward stepping element unit relative to the rear stepping element. However, this pipe pig is not adapted to pass obstacles in form of pipe stubs in the pipe. Many pipe connections in nuclear power stations are encumbered with such obstacles reducing the inside diameter of the pipe.

German patent No. 3 419 683 (corresponding to EP patent No. 0 170. 609) discloses a pipe pig for indicating defects on the inner side of a pipe. The pipe pig comprises two interdisplaced movable units. One of these units is provided with three projecting arms which may abut the inner surface of the pipe, pivotally arranged rollers being provided at the end of the arms. The arms may rotate around the longitudinal axis to allow the pipe pig to pass obstacles, if any, e.g. in form of stubs in the pipe, said obstacles being detected by means of a television camera. One drawback of this construction is that the movement of the complete unit depends on the friction created by a number of rollers (wheels) on the inner surface of the pipe. The friction is not provided, if essential parts of the inner pipe face are replaced by other components of a geometrical structure deviating from the structure of the original pipe face. This is often the case in complex pipe lines in nuclear power systems. For the same reason and also when the wheels abut the pipe wall, the wheels are not able to roll without slip. This reduces the possibility of establishing an accurate position.

### Brief Description of the Invention

The object of the present invention is to provide a more flexible movable robot, whereby the accurate position is determined in a more simple manner than hitherto known.

A robot of the above type according to the invention is characterised by a rotation connection and a prismatic connection interconnecting the two or several intermovable units the prismatic connection and the rotation connection being controlled by different means and by one of the movable units being fixed relative to the pipe, at least one of the other movable units being movable relative thereto, and the other movable unit being rotable as well as well as displaceable relative to the fixed unit acting as a fixed reference for the other unit. As a result, the exact position of the robot may be provided at any time, the position being continuously set relative to a fixed reference position. The fixed reference is not fixed in the usual sense, but is established by the presently stationary part of the two-part, movable robot. The accuracy is such that the travel pattern during insertion of the robot also may be used during retraction, as the travel pattern in this case is performed in the opposite sequence.

Moreover, the robot may be adapted such that each set of legs may be moved synchronously in and out of the carrier unit according to the "umbrella principle".

### Brief Description of the Drawings.

The invention is explained in greater detail below with reference to the accompanying drawings, in which
Fig. 2 illustrates the robot according to the invention comprising a carrier unit and a manipulator unit,
Fig. 3 is an illustration of the travel cycle of the carrier unit,
Fig. 4 is an illustration of how the robot inadvertently may be located between obstacles in the pipe,

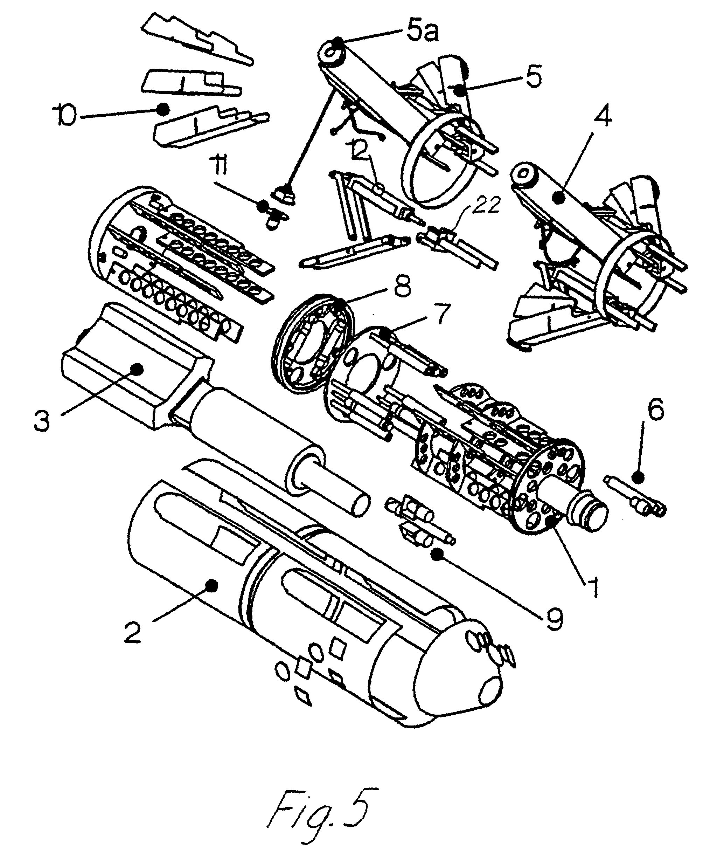

Fig. 5 is an exploded view of the carrier unit,
Fig. 6 illustrates a tool manipulator unit of the carrier unit and

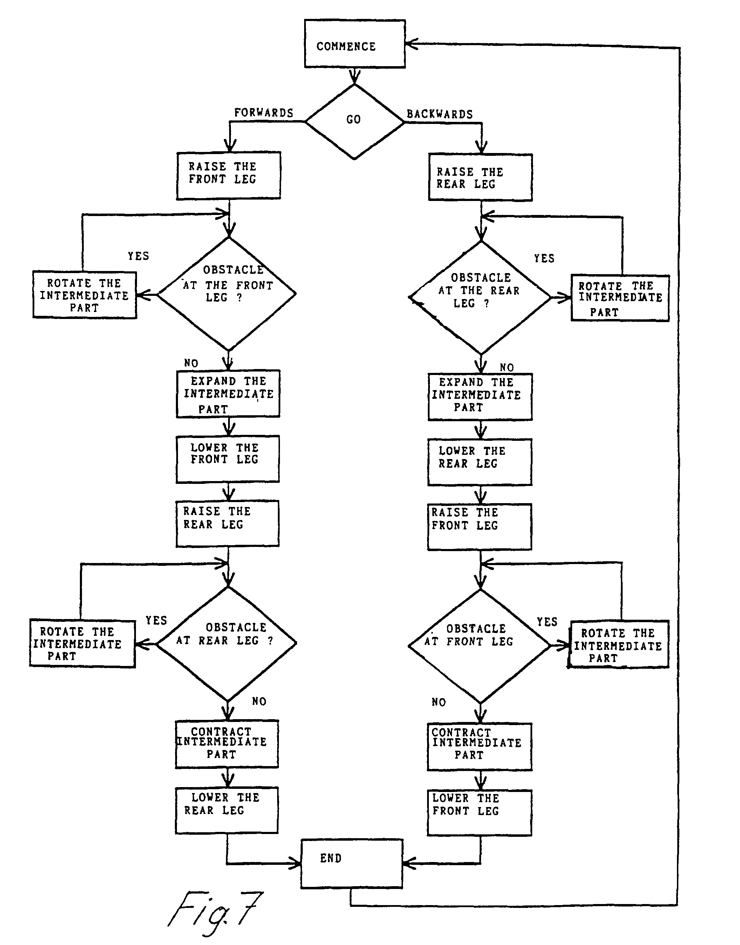

Fig. 7 is a flow chart of a programme for controlling the robot.

### Best Mode for Carrying Out the Invention

According to the invention, a movable robot is provided for internal inspection of a pipe system. The following criteria are essential for the structure of the robot:
1. The robot is prevented from being stuck in the pipe.
2. The robot shall be able to pass internal obstacles in the pipe and in pipes without definition.
3. The applicability is to be as wide as possible.

In view of the risk of malfunctions, all components in the carrier unit have been doubled.

### Applicability.

The best possible applicability is obtained by means of tool manipulator unit having six axes. Such a tool manipulator unit is advantageous in many ways. Several tools may be mounted in such a unit, whereby it is possible to alternate between different tools without removing the robot from the pipe.

The objectives for the dimensioning of robot are as follows:
- the same robot is to be used for several pipe dimensions,
- it should always be possible to remove the robot regardless of its position in the system and even if it is without power or out of control,
- the manipulator unit is to have the utmost flexibility such that there are virtually no limits for the used tools.

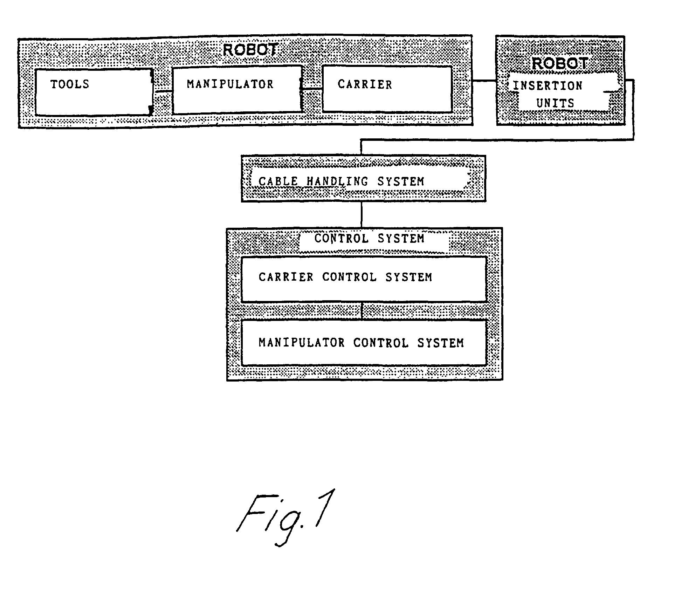

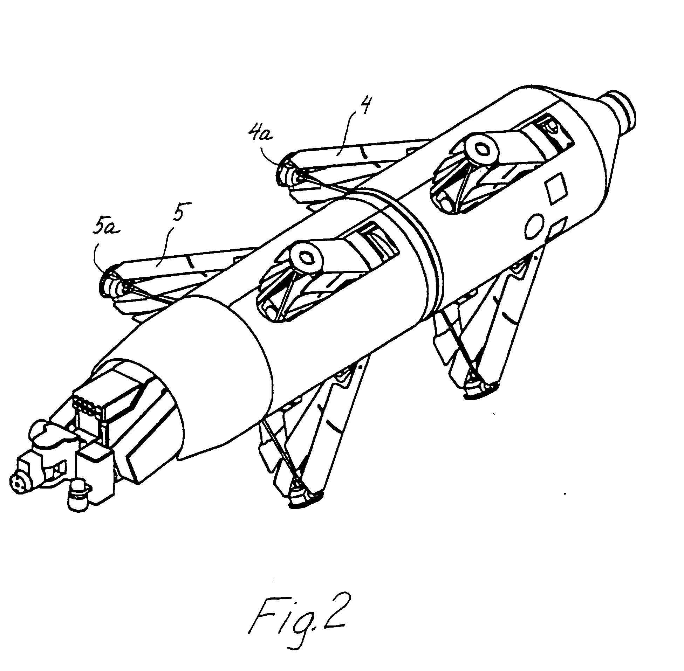

The main components of the inspection system are shown in Fig. 1. The primary components are the carrier unit and the movable manipulator unit mounted thereon. The tools can be mounted on the manipulator unit. The carrier unit is shown in Fig. 2. Various insertion units can be used for the installation/removal of the robot in a pipe system or the robot can be inserted manually.

The robot is connected to an external control system comprising hardware and software for the simulation and monitoring of the robot. The system further comprises sensors and recording units for the control and monitoring of the robot. If desired, cameras for visual inspection of the pipe system can be mounted. In the following, the individual main components are described in details.

The carrier unit is based on a traveller principle and provided with two sets of legs 4, 5. The legs 4,5 are arranged in separate parts of the carrier unit. The two parts are interconnected by a rotation and prismatic connection. This connection enables the carrier unit to move forward and backward in pipes and pipe lines and pass obstacles, if any, therein. Each set of legs comprises three legs. A circular friction pad 4a, 5a having a spring-loaded steel ball is provided at the end of each leg 4,5.

Each set of legs 4,5 can be moved synchronously in and out according to the "umbrella principle" to ensure a centering of the carrier unit and a fixed contact between the friction pads 4a,5a and the pipe surface. The legs 4, 5, the rotation connection 8 and the prismatic connection 7 are all supplied with energy via double-acting pneumatic cylinders provided with coders enabling a positioning of the legs 4,5 and thus providing flexibility to compensate for variations in the diameter of the pipe. As a result, the pneumatic is reliable in relation to variations in the pipe diameter and able to withstand overloadings which might damage the carrier unit. Each of the legs are moreover provided with a sensor mechanism, e.g. in form of a pressure sensor. The sensor mechanism is able to register influences from all directions.

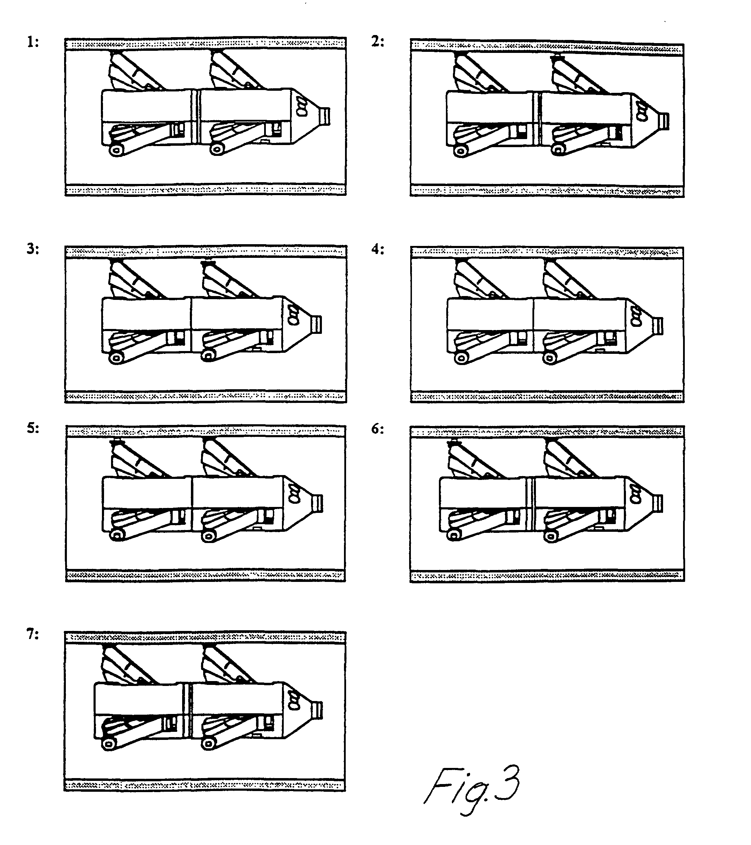

The carrier unit is moved forwards and backwards in the pipe by extension/contraction of the front legs 5, the rear legs 4 and the prismatic connection in a special cyclic order, confer Fig. 3 illustrating this cycle.

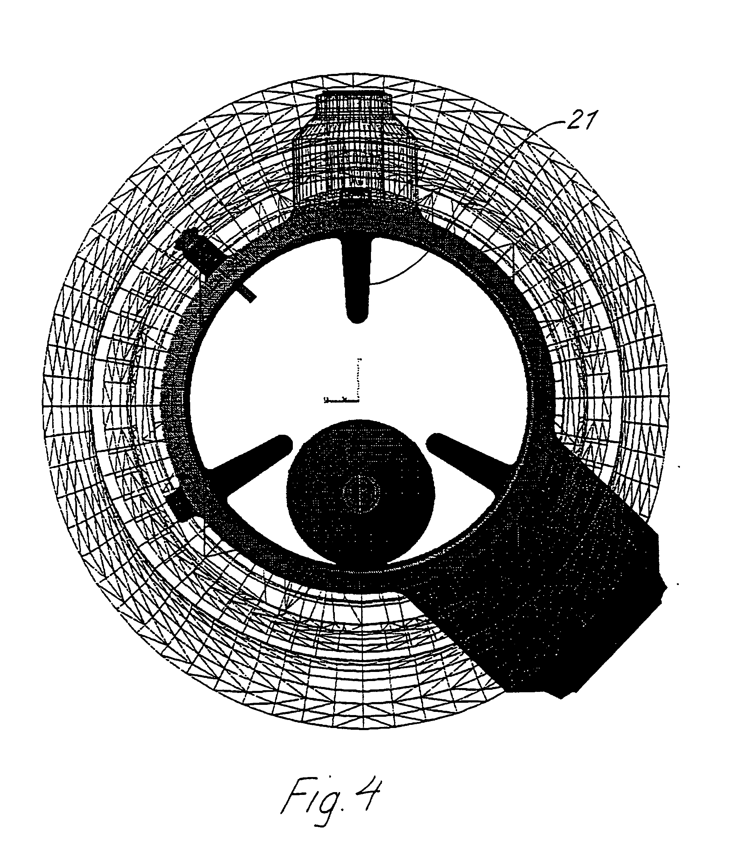

The robot is to be able to pass obstacles in form of holes or objects in the pipe, confer Fig. 4. A rotation connection 8 is provided to enable the robot to pass obstacles 21 in the pipe. As a result, the legs can be adjusted relative to the obstacles 21 and pass these. The robot can pass closely spaced obstacles, as the carrier unit can rotate on the spot without moving backward or forwards in the pipe. The first set of legs rotates by retracting the legs such that the friction pads 4a or 5a no longer abut the pipe wall, the spring-loaded balls, however, still abutting the wall. In combination with a control/positioning system the rotation connection 8 can also be used to maintain the carrier unit in a chosen orientation and thus compensate for external factors which otherwise may influence the orientation of the carrier unit. The control system for the pneumatic cylinders moving the legs is adapted such that in case a leg inadvertently is pushed into a hole in the pipe wall, only a portion corresponding to a diameter exceeding the pipe diameter at the position of the carrier unit by 10 mm is pushed into said hole. Thus, it is always possible to retract and rotate said leg.

The friction pads 4a, 5a on the legs 4, 5 are further supported such that they can adjust to the inner face of the pipe when the carrier unit is moved in a pipe bend.

This principle of the carrier unit is not only chosen, since it enables the carrier unit to move around in the pipes and pass obstacles 21, but also since only comparatively few and simple movable parts are required.

The carrier unit is torpedo-shaped and has a diameter of approximately 330 mm. The legs can be completely retracted, thus providing the carrier unit with a smooth surface so as to reduce the risk of the carrier unit being caught on obstacles, if it is retracted in case of failures, such as power failure and/or defects in the control signals. The legs are spring-loaded such that they are automatically retracted into the carrier unit in case of a power failure.

The carrier unit may be provided with additional sensors such as pressure sensors to register obstacles.

The carrier unit comprises two aluminium frames interconnected by means of the rotation and prism connection. Each leg is formed of an aluminium rod and a slide 22 slidable on each of the aluminium frames by means of a pneumatic cylinder 12. As mentioned above, the legs of each set of legs are interconnected by means of a umbrella-like system so as to ensure a synchronous movement of the legs. The prismatic connection is controlled by means of three pneumatic cylinders 7 connected with guides. The rotation connection is controlled by means of two pneumatic cylinders 8 enabling a rotation of up to 50°. By doubling the number of cylinders for each movement the control system may be formed as two independent systems. When only one system is operating, the carrier unit is still operational, whereby the removal of the carrier unit and the manipulator unit is possible. As a result, the reliability of the system is increased. To further increase the reliability, the pneumatic system is provided with valves automatically releasing the air pressure on the "expanding side" of the pneumatic cylinder pistons and thus enabling the spring to retract the legs into the carrier unit in case both systems fail.

In the centre of the carrier unit, a waterproof container 3 is provided for the control electronics and valves are provided for the carrier unit as well as for the manipulator unit. The container 3 is divided into independent chambers such that each of the two independent control systems can be placed in a separate chamber.

### The manipulator unit

For an optimum flexibility of the tools to be used, the robot can be provided with a manipulator unit having six degrees of freedom as previously mentioned. As a result, the tools can essentially reach any position in the system to be inspected.

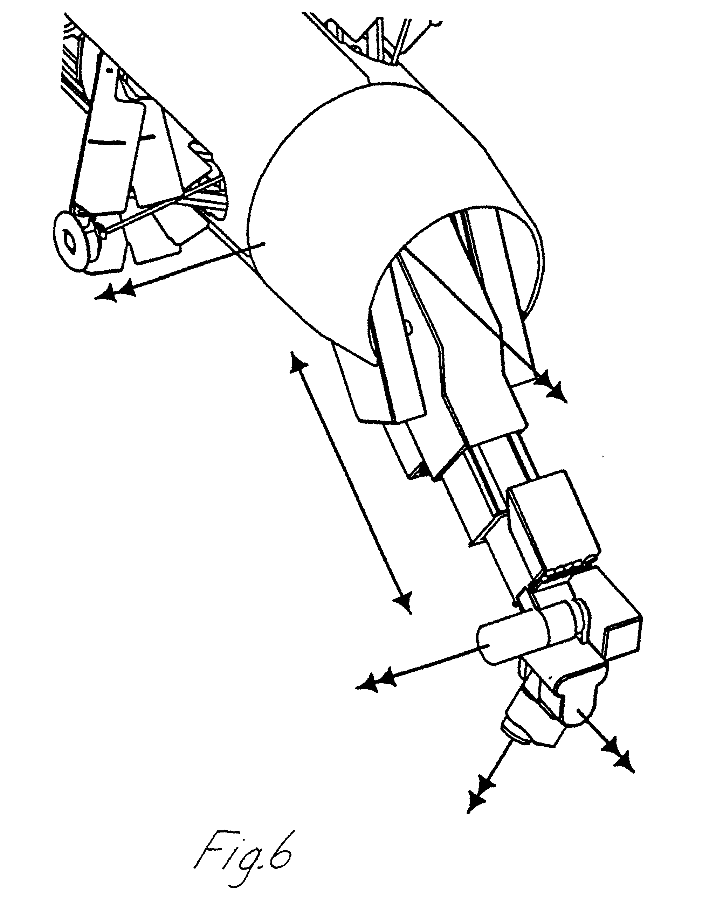

The third axis of the manipulator unit is a telescopic arm - confer Fig. 6. The first axis corresponds to the rotation of the manipulator unit around the central axis of the carrier unit. The axis is energized by means of a motor in the carrier unit. The second axis is the shoulder of the telescopic arm. The connection is moved by means of a two linear motors comprising ball joints. The telescopic arm comprises three members for extension of the operational space and is operated by means of a ball joint. The use of ball joints to move the axes 2 and 3 ensures that said axes are not self-locking, whereby the built-in springs can retract the axes in case of a power failure. The end of the telescopic arm is provided with a "hand" on which the tools can be mounted.

In case the load exceeds the maximum permissible moment of the gears in the "hand" the tools may optionally be mounted directly on the end of the telescopic arm.

The manipulator unit may be provided with two sets of monitoring cameras with light sources. Moreover, a connection box for tools is provided at the end of the telescopic arm.

Depending on the size of the tools used and the system to be inspected the manipulator unit can be provided with several different tools at the same time.

Four sensors are used to monitor and control the robot. Two sensors are mounted on the carrier unit and one of these has a rear view, while the other has a side view. Two sensors are arranged on the arm of the manipulator unit (Fig. 6) and can be used to position the manipulator unit, to control the movements of the carrier unit and to monitor the tools.

The positioning system for the robot is divided into the two systems, viz. a system for the carrier unit and a system for the manipulator unit. In terms of hardware the two system are independent. However, to establish an absolute position of the particular tool, the two systems are adapted to interact. The position system of the carrier unit provides the position of the carrier unit relative to a system of reference co-ordinates on the test piece, while the position system of the manipulator unit provides the absolute position of the tool used relative to the reference system on the carrier unit.

The carrier unit is provided with three position monitoring systems.
1. Coders on the prismatic connection and on the rotation connection.
2. Sideways sensors, preferably pressure sensors, to observe characteristic features having a known position in the test piece.
3. A gyroscope providing the position and orientation of the carrier unit relative to the latest calibrated position.

The carrier unit is moved to a position where the sensor recognizes a feature having a known position in the system of reference co-ordinates and the position of the carrier unit is altered on the basis of the position of this feature in the sensor display and the position of the sensor on the carrier unit, confer the position monitoring system No. 2. As an option to the sideways sensor, jointly with the position and control system of the manipulator unit a sensor having a known position on the manipulator unit may be used for recalibration of the position of the carrier unit.

The third position system is the gyroscopic position sensor. This sensor provides the position of the carrier unit in the working area relative to the position of the last calibration of the system. The sensor estimates the position by means of signals from three gyroscopes and three accelerometers. As the system is continuously operating, the actual position and the estimated position differs from each other. The difference per unit of time depends inter alia on external factors and the accuracy of the sensor. In order to eliminate the difference the senor can be recalibrated by means of the position monitoring system No. 2.

As previously mentioned, all of axes of the manipulator unit are provided with coders. By using known measured positions of the system of tool co-ordinates relative to the tool flange of the manipulator unit, the control system of the manipulator unit can estimate the absolute position relative to the carrier unit. When using absolute coders it is not necessary to recalibrate the manipulator unit in case of a power supply failure.

### Control Hardware

The control hardware of the robot comprises two circuits A and B. Circuit A is the main circuit controlling actuators connected to axes on the carrier unit and the manipulator unit. Circuit B is a secondary circuit controlling actuators connected to axes on the carrier unit and an axis 2 on the manipulator unit (for rotation of the telescopic arm). Both circuits operate during normal operation. If one of the circuits fails, the other circuit is still able to turn the telescopic arm to its retracted position and move the carrier unit at a reduced pressure on the legs. The circuits are provided with independent power supplies, electrical conductors and hoses in the main cable. The control electronics is formed of separate modules comprising control and communication electronics. The modules communicate through a local ring network. The communication in the ring network and between the ring network and a base station is controlled by a master module optionally connected to two driver modules. Additional driver modules can be connected to the system by means of auxiliary link modules comprising an additional communication computer and an additional power supply. Three different driver modules are used in the control hardware. A DC-motor driver unit is arranged in the same housing as the DC-motor, an independent DC-motor driver unit for three smaller DC-motors and a valve control driver for double-acting, pneumatic valves.

The master module for the circuits A and B communicates with the computer of the control system via to serial interface connections.

The control software of the robot controls and monitors the carrier unit as well as the manipulator unit.

The control software of the robot for external monitoring has been developed by by means of ROBCAD open system Environment (ROSE) and ROBCAD/Martell (Monitoring and remote Teleoperating Environment) with ROBCAD CAD/CAM software.

The control software of the carrier unit is one of the two parts of the control software of the system. The carrier unit can be operated independently or jointly with the manipulator unit. The following control options are available to the operator:

Movement of connections, whereby each of the four degrees of freedom of the carrier unit is controlled separately, and enabling the operator to move the carrier manually. These degrees of freedom are as follows: 1) front legs 3, 2) rear legs 3, 3) prismatic connection between the front legs and the rear legs, 4) rotation between the front legs and the rear legs.

Movement of the carrier unit enables the operator to move this backwards and forwards by means of predetermined guide lines. Moreover, the operator is able to control the rotation connection between the two parts of the carrier unit.

The manipulator unit is controlled by the second part of the control software. The manipulator unit is controlled independently or jointly with the corresponding carrier unit.

## Claims

1. A movable robot comprising a carrier unit and a manipulator unit, the carrier unit causing an axial movement in a pipe line and comprising two or several intermovable units, each movable unit preferably provided with three projecting legs (4, 5) having contact surfaces (4a, 5a) for abutting the inner side of the pipe such that said movable unit is fixed relative to the pipe, **characterised by** a rotation connection and a prismatic connection interconnecting the two or several intermovable units, the prismatic connection and the rotation connection being controlled by different means, and by one of the movable units being fixed relative to the pipe, at least one of the other movable units being movable relative thereto and the other movable unit being rotatable as well as displaceable relative to the fixed unit acting as a fixed reference for the other unit.

2. A movable robot as claimed in claim 1, **characterised in that** each set of legs may be moved synchronously in and out of the carrier unit according to the "umbrella principle" so as to provide a centering of the carrier unit.

3. A movable robot as claimed in claims 1-2, **characterised in that** sensors such as pressure sensors which are sensitive preferably in all directions are provided on the contact surfaces.

4. A movable robot as claimed in one or more of the preceeding claims,
**characterised in that** sensors such as pressure sensors preferably sensitive in all directions are provided on the manipulator unit.

5. A movable robot as claimed in claims 1-4, **characterised in that** the carrier unit is provided with additional sensors such as pressure sensors to register obstacles.

6. Method for using a movable robot as claimed in one or more of the ing claims **characterised by** storing the positions of the different obstacles in the pipeline to provide a travel pattern to be used during retraction of the robot.

## Patentansprüche

1. Bewegbarer Roboter mit einer Trägereinheit und einer Manipulatoreinheit, von denen die Trägereinheit eine Axialbewegung in einer Rohrleitung bewirkt und zwei oder mehrere gegenseitig bewegbare Einheiten aufweist, wobei jede bewegbare Einheit vorzugsweise mit drei vorstehenden Beinen (4, 5) versehen ist, die Kontaktflächen (4a, 5a) zur Anlage an der Innenseite des Rohres haben, derart, dass die bewegbare Einheit relativ zu dem Rohr festgelegt ist, **gekennzeichnet durch** eine Drehverbindung und eine prismatische Verbindung, die die zwei oder mehreren gegeneinander bewegbaren Einheiten verbindet, wobei die prismatische Verbindung und die Drehverbindung **durch** unterschiedliche Mittel gesteuert werden, und **dadurch**, dass eine der bewegbaren Einheiten relativ zu dem Rohr festgelegt ist, wobei mindestens eine der anderen bewegbaren Einheiten relativ dazu bewegbar ist und die andere bewegbare Einheit relativ zu der festgelegten Einheit, die als ortsfester Bezug für die andere Einheit dient, drehbar sowie verschiebbar ist.

2. Bewegbarer Roboter nach Anspruch 1, **dadurch gekennzeichnet, dass** jede Gruppe von Beinen entsprechend dem "Regenschirmprinzip" synchron in die Trägereinheit und aus der Trägereinheit bewegbar ist, um für eine Zentrierung der Trägereinheit zu sorgen.

3. Bewegbarer Roboter nach Anspruch 1 - 2, **dadurch gekennzeichnet, dass** Sensoren wie Drucksensoren, die vorzugsweise in allen Richtungen wirksam sind, an den Kontaktflächen vorgesehen sind.

4. Bewegbarer Roboter nach einem oder mehreren der vorhergehenden Ansprüche, **dadurch gekennzeichnet, dass** Sensoren wie Drucksensoren, die vorzugsweise in allen Richtungen wirksam sind, an der Manipulatoreinheit vorgesehen sind.

5. Bewegbarer Roboter nach den Ansprüchen 1 bis 4, **dadurch gekennzeichnet, dass** die Trägereinheit mit zusätzlichen Sensoren wie Drucksensoren zum Erfassen von Hindernissen versehen ist.

6. Verfahren zum Verwenden eines bewegbaren Roboters nach einem oder mehreren der vorhergehenden Ansprüche, **dadurch gekennzeichnet, dass** die Positionen der verschiedenen Hindernisse in der Rohrleitung gespeichert werden, um ein Bewegungsmuster zur Verwendung beim Zurückziehen des Roboters zu schaffen.

## Revendications

1. Robot déplaçable comportant une unité de transport et une unité de manipulation, l'unité de transport étant apte à provoquer un déplacement axial dans une canalisation et comportant deux ou plusieurs unités déplaçables entre elles, chaque unité déplaçable est équipée de préférence avec trois jambes (4, 5) en saillie ayant des surfaces de contact (4A, 5A) pour prendre appui sur le coté intérieur de la canalisation de manière à fixer ladite unité déplaçable par rapport à la canalisation, **caractérisé par** un raccord pivotant et un raccord coulissant raccordant les deux ou plusieurs unités déplaçables entre elles, le raccord coulissant et le raccord pivotant étant commandés par différents moyens, en ce qu'une des plusieurs unités déplaçables est fixée par rapport à la canalisation, au moins une des autres unités déplaçables étant déplaçable par rapport à celle-ci et les autres unités étant pivotables aussi bien que déplaçables par rapport à l'unité fixée qui sert de référence fixe pour les autres unités.

2. Robot déplaçable selon la revendication 1, **caractérisé en ce que** chaque jeu de jambes peut être déplacé de manière synchrone vers l'extérieur et vers l'intérieur de l'unité de transport selon le "principe du parapluie" de manière à obtenir un centrage de l'unité de transport.

3. Robot déplaçable selon les revendications 1 ou 2, **caractérisé en ce que** des capteurs tels que des capteurs de pression qui sont sensibles de préférence dans toutes les directions sont disposés sur les surfaces de contact.

4. Robot déplaçable selon une ou plusieurs des revendications précédentes, **caractérisé en ce que** des capteurs tels que des capteurs de pression sensibles de préférence dans toutes les directions sont disposés sur l'unité de manipulation.

5. Robot déplaçable selon l'une quelconque des revendications 1 à 4, **caractérisé en ce que** l'unité de transport est associée à des capteurs additionnels tels que des capteurs de pression pour indiquer des obstacles.

6. Procédé d'utilisation d'un robot déplaçable selon une ou plusieurs des revendications précédentes, **caractérisé par** l'enregistrement des positions des différents obstacles dans la canalisation de manière à fournir un modèle de trajet destiné à être utilisé lors du retrait du robot.
